# EUROPEAN PATENT APPLICATION

(11) **EP 1 734 692 A1**
(43) Date of publication of application: **20.12.2006**
(21) Application number: 06253081.1
(22) Date of filing: 14.06.2006
(51) Int. Cl.: H04L 12/24, H04L 12/26

(54) **Method and apparatus for monitoring physical network topology information**

(30) Priority: 14.06.2005 US 690149 P; 13.06.2006 US 423826
(71) Applicant: PANDUIT CORPORATION, Tinley Park, Illinois 60477-3091 (US)
(72) Inventor: Nordin, Ronald A., Neaperville Illinois 60540 (DE)
(74) Representative: Roberts, Gwilym Vaughan

(57) **Abstract**

A method and apparatus are provided for monitoring the physical topology of a network on a real-time basis. For patch panel systems, the approach is based upon a distributed architecture that may be modularly scalable and may allow each patch panel (302) to determine port level connectivity by independently monitoring an out-of-band channel supported by each respective port. The approach provides improved real-time reporting of patch panel connectivity with reduced cabling complexity, increased reliability and decreased maintenance costs. The approach is capable of determining the physical equipment and/or physical location information associated with the respective patch panel ports, in real-time, and thereby provide physical network topology information associated with patch cord connections. The approach is compatible with multipurpose network management systems.

## Description

### CROSS-REFERENCE TO RELATED APPLICATIONS

This application incorporates by reference U.S. Patent Application No. 11/265,316, entitled "Method and Apparatus for Patch Panel Patch Cord Documentation and Revision," filed on November 2, 2005, which claims priority to U.S. Provisional Patent Application No. 60/624,753, filed on November 3, 2004, and U.S. Provisional Patent Application No. 60/690,150, entitled "Method and Apparatus for Reliable Network Cable Connectivity," filed on June 14, 2005, in their entirety.

### BACKGROUND

### 1. Field of Invention

The present invention pertains to network cable management.

### 2. Description of Related Art

One exemplary approach for collecting physical network topology information has been to replace traditional passive network cable systems with systems that support rudimentary schemes for monitoring cable connections. Unfortunately, such exemplary approaches have proven inadequate to meet the need of network managers for accurate physical network topology information.

### SUMMARY OF THE INVENTION

A method and apparatus are provided for monitoring the physical topology of a network on a real-time basis. For patch panel systems, in one embodiment, a distributed architecture may be used that allows each patch panel to determine port level connectivity independently. Improved real-time reporting of patch panel connectivity may be provided with reduced cabling complexity, increased reliability, and decreased maintenance costs. Further, the physical equipment and/or physical location information associated with patch panel ports connected by a patch cord may be determined as each respective patch cord connection is made, thereby providing physical network topology information, or network path information, associated with the respective patch cord connections in real-time. In addition, this embodiment is compatible with (i.e., may communicate with and be controlled by) a multipurpose network management system (NMS).

In an exemplary embodiment, a method is disclosed for monitoring a physical topology of a network containing a local device having a local port and a remote device having a remote port connectable to the local device through a data channel and an out-of-band channel. This method may comprise: (a) storing physical topology information that describes at least one of a physical location, a device identifier, or a port identifier in the local device and the remote device; (b) transmitting, from the local device on the out-of-band channel, a local device identifier and a local port identifier associated with the local device and the physical topology information stored by the local device; (c) receiving, at the local device on the out-of-band channel, a remote device identifier associated with the remote device, a remote port identifier associated with the remote device, and the physical topology information stored by the remote device if the remote device and the remote device are connected through the out-of-band channel; (d) determining a status of a network cable connection between the local device and the remote device based upon the remote device identifier and the remote port identifier received by the local device; and (e) transmitting a status update message to a network management system, the status update message including the local device identifier, the local port identifier, the transmitted physical topology information, the received remote device identifier, the received remote port identifier, the received physical topology information, and the status of the network cable connection.

In another embodiment, a local device is disclosed for monitoring a physical topology of a network comprising the local device and a remote device connectable to the local device through a data channel and an out-of-band channel of a network cable connection. The local device may comprise: the port (which has a local port identifier associated therewith); a storage device adapted to store physical topology information that describes at least one of a physical location of the local device, a local device identifier, or the local port identifier; a transmitter adapted to transmit, on the out-of-band channel, the local device identifier, the local port identifier, and the stored physical topology information; a receiver adapted to receive, on the out-of-band channel, a remote device identifier associated with the remote device, a remote port identifier associated with the remote device, and physical topology information stored by the remote device if the remote device and the remote device are connected through the out-of-band channel; a port controller adapted to couple the storage device to the transmitter and to the receiver, to determine a status of the network cable connection based upon the received remote device identifier and the received remote port identifier, and to generate a port status update upon determining that a change in the status of the network cable connection has occurred; and a device controller adapted to receive the port status update and to transmit a status update message to a network management system, the status update message including the local device identifier, the local port identifier, the transmitted physical topology information, the remote device identifier, the remote port identifier, the received physical topology information, and the status of the network cable connection.

In another embodiment, a program product apparatus is disclosed. The program product apparatus has a computer readable medium with computer program logic recorded thereon for monitoring a physical topology of a network comprising the local device and a remote device connectable to the local device through a data channel and an out-of-band channel of a network cable connection. The program product apparatus may comprise: a storage device module adapted to store physical topology information that describes at least one of a physical location of the local device, a local device identifier, or a local port identifier of a local port of the local device; a transmitter module adapted to transmit, on the out-of-band channel, the local device identifier and the local port identifier and the stored physical topology information; a receiver module adapted to receive, on the out-of-band channel, a remote device identifier and a remote port identifier associated with the remote device and physical topology information stored by the remote device; a port controller module adapted to couple the storage device to the transmitter and to the receiver, to determine a status of the network cable connection based upon the received remote device identifier and the received remote port identifier, and to generate a port status update upon determining that a change in the status of the cable connection has occurred; and a device controller module adapted to receive the port status update and to transmit a status update message to a network management system that includes the local device identifier, the local port identifier, the transmitted physical topology information, the received remote device identifier, the received remote port identifier, the received physical topology information, and the status of the network cable connection.

In another embodiment, an apparatus is disclosed for monitoring a physical topology of a network comprising the local device and a remote device connectable to the local device through a data channel and an out-of-band channel of a network cable connection. The apparatus may comprise: means for storing physical topology information that describes at least one of a physical location of the local device, a local device identifier, or a local port identifier of a local port of the local device; means for transmitting, on the out-of-band channel, the local device identifier, the local port identifier, and the stored physical topology information; means for receiving, on the out-of-band channel, a remote device identifier and a remote port identifier associated with the remote device and physical topology information stored by the remote device; means for determining a status of the network cable connection based upon the received remote device identifier and the received remote port identifier; and means for transmitting a status update message to a network management system that includes the local device identifier, the local port identifier, the transmitted physical topology information, the received remote device identifier, the received remote port identifier, the received physical topology information, and the status of the network cable connection.

### BRIEF DESCRIPTION OF THE DRAWINGS

Exemplary embodiments are described below with reference to the above drawings, in which like reference numerals designate like components.

Fig. 1A is a schematic diagram depicting messaging exchanged between two modular patch panels;

Fig. 1B is a detail diagram depicting an exemplary nine-wire patch cord terminator and an exemplary nine-wire patch cord jack/contact pad;

Fig. 2 is a block diagram of an exemplary modular patch panel depicted in Fig. 1A;

Fig. 3 is a block diagram of an exemplary panel controller module as depicted in Fig. 2;

Fig. 4 is a block diagram of an exemplary port controller module as depicted in Fig. 3;

Fig. 5 is an exemplary flow chart of the workflow associated with startup of an exemplary modular patch panel; and

Fig. 6 is an exemplary flow chart of the workflow associated with operation of an exemplary modular patch panel to monitor patch panel port level connectivity information and report physical network topology information.

### DETAILED DESCRIPTION OF PREFERRED EMBODIMENTS

Methods and apparatus for monitoring the physical topology of a network may be applied on a real-time basis, and may be applied to a variety of network devices. For example, as described below, exemplary embodiments may be applied to monitoring the physical topology of a network based upon dynamically monitored patch panel connectivity.

Networks may be characterized by a logical topology and a physical topology. The logical topology of a network includes information related to the logical connectivity of devices connected to the network. For example, the logical topology for a data or telecommunications network may indicate the presence and identity of network devices (e.g., routers, switches, intelligent hubs, etc.) connected to the network, the presence and connectivity of end-user devices (e.g., servers, network data repositories, printers, user workstations, etc.), the logical connectivity (e.g., logical ports that are enabled on each of the respective devices for communication, etc.) between the devices, and the logical location of the devices (e.g., static or dynamically assigned Internet Protocol (IP) numbers, etc.). Such information may be managed by a Network Management System (NMS) which receives and stores information contained within Simple Network Management Protocol (SNMP) messages generated and transmitted to the NMS by individual network devices and/or end-user devices.

The physical topology of a network may include information related to the physical location of equipment (e.g., building, equipment closet, etc.) and the physical connectivity (e.g. device identifier/physical port, etc.) between network devices and between network devices and end-user devices. Such physical connectivity information between network devices and end-user devices may preferably include the physical connection/cable path between the respective network devices and between network devices and end-user devices.

Network managers responsible for managing large Information Technology (IT) infrastructures have long desired access to accurate and comprehensive logical network topology information combined with accurate and comprehensive physical network topology information to form a single integrated view of their IT environment.

Physical topology information may be collected manually, based upon physical surveys of the physical infrastructure. The task of conducting physical surveys may often be complicated by physical inaccessibility to network devices and/or end-user equipment, the sheer volume of interconnecting cables, and the use of passive termination/junction points (e.g., patch panels, distribution panels, etc.) in the cable plant to provide connectivity between network devices as well as to provide connectivity between network devices and end-user equipment. The volume of cabling, coupled with inconsistent labeling conventions (or no labeling at all), makes the task of maintaining accurate physical topology information very difficult and expensive to maintain. Thus, access to accurate physical topology information for supporting network fault detection/resolution process and/or long or short term maintenance planning may be difficult. The following discussion uses patch panels as an example for ease of understanding.

Although some patch panels may support a rudimentary scheme for determining the patch panel ports that are connected by a patch cord, such systems do not determine the physical equipment and/or physical location information associated with the respective patch panel ports. Hence the systems do not provide physical network topology information, or network path information, associated with the respective patch cord connections.

In view of the above, a patch panel capable of monitoring and reporting patch panel port level connectivity that is based upon a modularly scalable, distributed architecture is desirable. Such an approach would preferably be capable of determining the physical equipment and/or physical location information associated with the respective patch panel ports as patch cord connections are established, and hence provide dynamic physical network topology information, or network path information, associated with the respective patch cord connections in real-time. Further, such an approach would preferably reduce, if not eliminate, polling delays and polling related overhead processing by supporting real-time monitoring of port connectivity at the port level. In addition, such an approach would provide improved real-time reporting of patch panel connectivity with reduced cabling complexity, increased reliability and decreased maintenance costs.

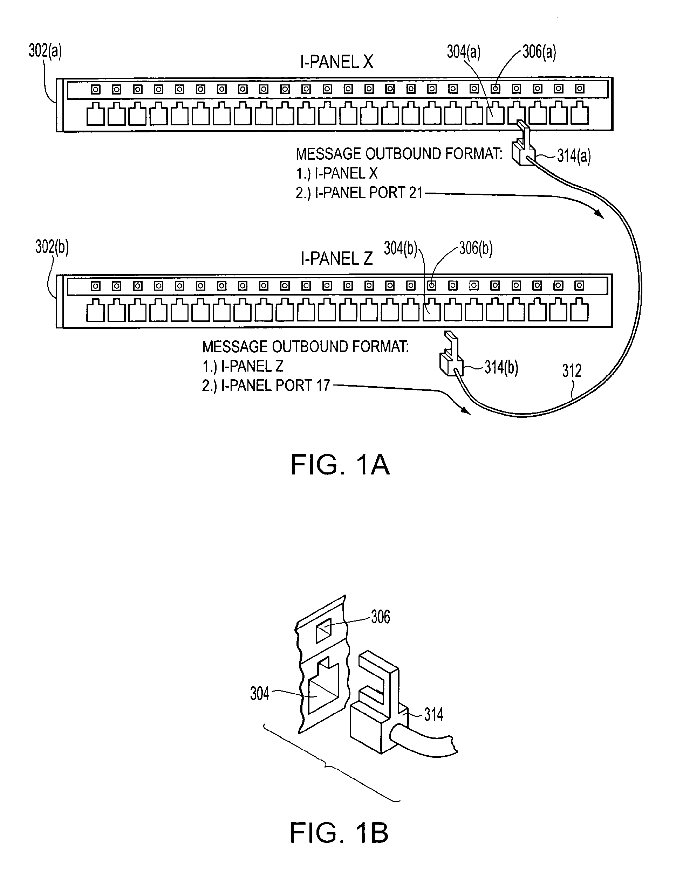

Fig. 1A is a schematic diagram of two exemplary modular, intelligent patch panels, or I-Panels, 302(a-b). Each modular patch panel 302 is based upon a modularly scalable, distributed architecture. Each I-Panel 302 is capable of monitoring and reporting patch panel port level connectivity formed by patch cords manually connected between ports on one or more I-Panel devices. The I-Panel architecture is modularly scalable in that the architecture allows network patch panel capabilities to be scaled in any manner by the introduction of any number of modular I-Panel devices. The I-Panel architecture allows patch cord connectivity between any two I-Panel ports to be determined based upon out-of-band communication between the respective connected ports over an out-of-band patch cord connection. For example, as shown in Fig. 1A, an exemplary I-panel system may use a nine-wire patch cord 312 in which eight wires support in-band Ethernet based data communication and a ninth wire is used for out-of-band patch cord management. In such an exemplary system, each end of patch cord 312 may be terminated with a nine contact RJ-45 based terminator 314. A detail view of an exemplary nine contact RJ-45 based terminator 314 and a corresponding patch panel RJ-45 based jack 304 with a 9^{th}-wire contact pad 306 are depicted in Fig. 1B. As further shown in Fig. 1A, in an exemplary patch cord connection between two exemplary intelligent patch panels 302(a) and 302(b) using a nine-wire patch cord 312, an RJ-45 based terminator 314(a) may form a physical connection with RJ-45 based jack 304(a) and a 9^{th}-wire contact pad 306(a) on I-panel 302(a) and RJ-45 based jack 314(b) may form a physical connection with an RJ-45 based jack 304(b) and a 9^{th-}wire contact pad 306(b) on I-panel 302(b). Although the patch cord 312 is shown as directly connecting the intelligent patch panels 302(a) and 302(b), one or more patch cords may permit communication between the intelligent patch panels 302(a) and 302(b), with one or more intermediate electronic devices disposed between the intelligent patch panels 302(a) and 302(b).

The modular I-Panel architecture supports patch panel monitoring that may be modularly scaled to support any size network, provides real-time monitoring with reduced delay, and employs a simplified inter-patch-panel cabling scheme that increases reliability and reduces maintenance costs.

The I-Panels depicted in Fig. 1A support the exchange of out-of-band messages between a modular I-Panel 302(a), labeled "I-Panel X," and a modular I-Panel 302(b), labeled "I-Panel Z." Each I-Panel port may repeatedly broadcast over the out-of-band channel a port message identifying the I-Panel/port generating the message. For example, as shown in Fig. 1A, an I-Panel port associated with Panel-X may transmit an outbound message "I-Panel X/Port 21" to indicate that the I-Panel port is the twenty-first port on I-Panel X. Further, as shown in Fig. 1A, an I-Panel port associated with I-Panel Z may transmit an outbound message "I-Panel Z/Port 17" to indicate that the I-Panel port is the seventeenth port on I-Panel Z.

As described in greater detail below, an I-Panel port controller managing each of the respective ports may be configured to include, in addition to the I-Panel identifier and port identifier, physical topology information related to the physical equipment (e.g., switch/port) and/or physical location (office/wall jack) information associated with each patch panel cable connected to, or hard-wired to, the back end of each respective patch panel port. Further, as described below, the physical topology information may be passed by each respective port controller to its respective patch panel controller and may be passed from the panel controller module over a network connection to the NMS. In this manner, the I-Panel may provide the NMS with physical network topology information, and/or network path information, associated with the respective patch cord connections, in real-time, as patch panel connections are formed. Further, by dynamically monitoring and dynamically reporting changes in patch panel port connectivity, as the changes occur, the NMS is assured access to highly accurate physical network topology information, or network path information, in real-time.

Each I-Panel port may repeatedly broadcast an outbound message upon an out-of-band channel. In addition, each I-Panel port may listen for receipt of an outbound message transmitted from another I-Panel port upon the out-of-band channel. Until a patch cord that supports the out-of-band communication channel is connected between two I-Panel ports, neither port will receive an out-of-band message. However, upon connection of two I-Panel ports with a patch cord that supports an out-of-band communication channel (e.g., a patch cord with a 9^{th} wire), each I-Panel port may receive the outbound message broadcast by the I-Panel port with which it has established connectivity. The I-Panel port controller associated with each of the respective ports may then generate, in real-time, an update message to their respective I-Panel patch panel controller. Upon receipt of an update message from a port controller, each respective I-Panel panel controller may generate and transmit an update message over a network connection to a remote NMS that is configured to organize and present the received physical topology information in a manner useful to an end user. The received physical topology information can be presented in any desired format to a technician, e.g. via a display, printout, or LEDs.

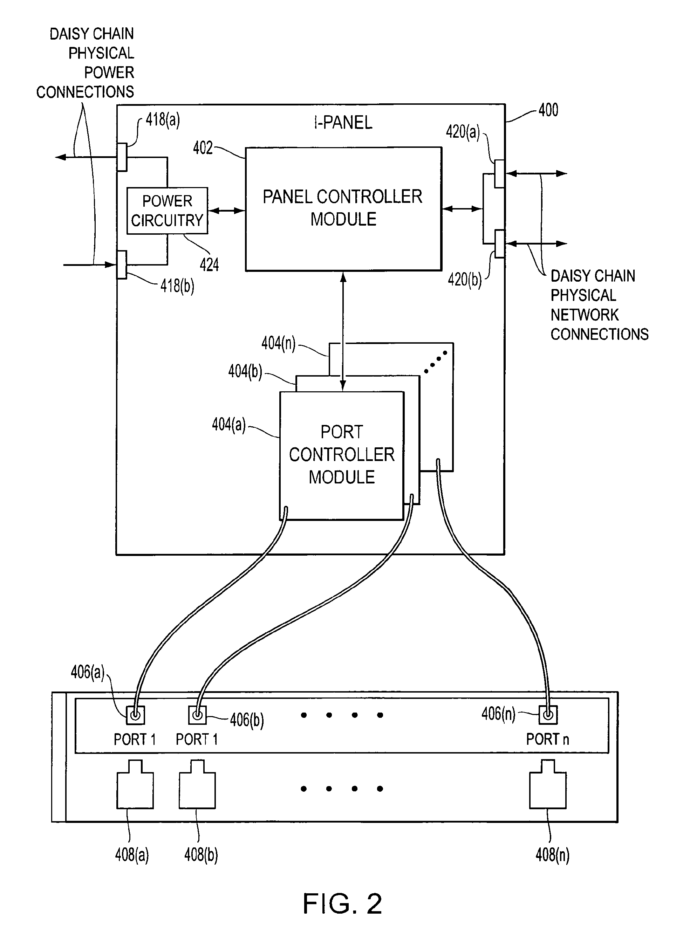

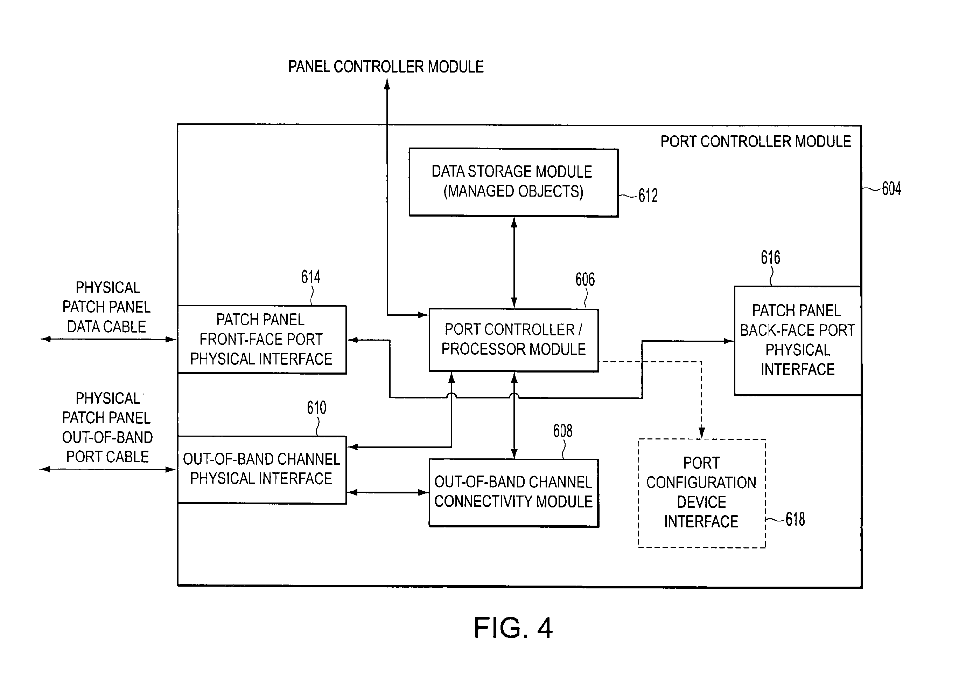

Fig. 2 is a block level diagram of an exemplary modular I-Panel configuration. As shown in Fig. 2, I-Panel 400 includes a panel controller module 402 that communicates with a plurality of port controller modules 404(a)-(n). Further, the I-Panel controller module 402 may support communication with another I-Panel and/or a network management system via daisy-chain network connection ports 420(a) and 420(b). In addition, I-Panel 400 may receive electrical power from a power supply or another I-Panel and may transfer power to another I-Panel via daisy-chained power connection ports 418(a) and 418(b) and power management circuitry 424. As described in greater detail below with respect to Fig. 4, port controller modules 404(a)-(n) may each monitor port level connectivity of a port by monitoring an out-of-band communication channel associated with the port. Such an out-of-band communication channel may be supported by a ninth wire electrical contact associated with the monitored port. For example, as shown in Fig. 2, port controller modules 404(a)-(n) monitor ports 1 through N, respectively, by each monitoring a ninth-wire out-of-band electrical contact pad 406(a)-(n) associated with each of RJ-45 based jacks 408(a)-(n), respectively.

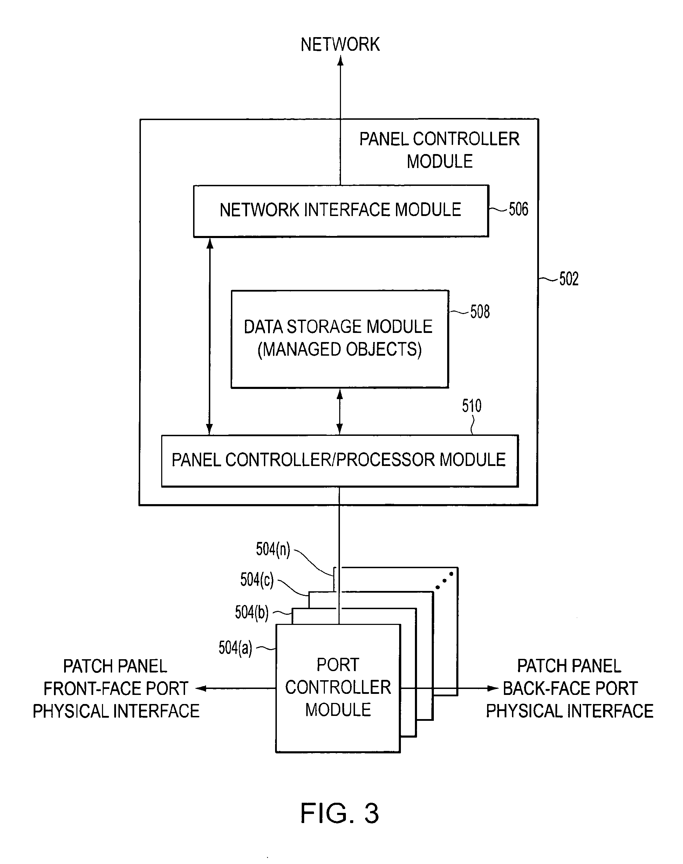

Fig. 3 is a block diagram of an exemplary I-Panel panel controller module 502. As shown in Fig. 3, panel controller module 502 may include a panel controller/processor module 510 in communication with a data storage module 508, a network interface module 506 and a plurality of port controller modules 504(a)-(n).

Panel controller/processor module 510 may communicate with each of the respective port controller modules 504(a)-(n) to receive port status updates and to transmit port configuration parameters used to control operation of the respective I-Panel port with which each of the respective port controller modules 504(a)-(n) is associated. Upon receipt of an update message from a port controller module 504, panel controller/processor module 510 may update status information stored within data storage module 508, generate an SNMP-compliant update message that includes connection-related information received from the port controller module, and transmit the generated SNMP-compliant update message to a remote network connected NMS via network interface module 506.

As described in greater detail below, the connection-related information received from the port controller module and forwarded by the panel controller module to the NMS may include physical equipment and/or physical location information associated with a newly formed patch panel connection. In this manner, the NMS is provided with physical network topology information, or network path information, associated with the respective patch cord connections in real-time as patch panel connections are formed.

Panel controller/processor module 510 may receive and process SNMP messages from the remote network-connected NMS via network interface module 506. The SNMP messages may contain updated configuration parameters for use in controlling the panel controller module 502 and/or one or more of port controller modules 504(a)-(n). Upon receipt of an update message from a remote network-connected NMS, panel controller/processor module 510 may update status information stored within data storage module 508, and generate/transmit an internal update message to one or more of the respective port controller modules 504(a)-(n).

Although not indicated in Fig. 3, panel controller/processor module 510 may include additional functionality/modules for use in controlling the behavior and operation of the I-Panel. Such additional modules may store and/or update within data storage module 508 managed objects associated with the additional functions performed (e.g., physical network topology information, or network path information, received from the respective port controller modules, as described above). Preferably, such objects may be stored in a structure and format compatible with a defined SNMP Management Information Base (MIB) to facilitate SNMP-based reporting (e.g., via an SNMP get-response message and/or via an SNMP event trap message, etc.) of the stored values from the panel controller/processor module 510 to the NMS and/or to support updates from the NMS to I-Panel panel controller module 502 via SNMP based messages (e.g., via the SNMP set command). For example, as described in greater detail below with respect to port controller module 504, an additional function that may be included in panel controller/processor module 510 supports the receipt and processing of command, control, and reporting instructions from the NMS via protocols other than SNMP.

Different panel controller module 502 configurations may include a panel controller/processor module 510 with capabilities that range from nominal functions to highly sophisticated monitoring and control functions. As such, the hardware/software modules required to implement panel controller module 502 may range from relatively simple modules with limited storage and processing capabilities to relatively complex modules with significant storage and processing capabilities.

Fig. 4 is a block diagram of an exemplary port controller module as depicted. As shown in Fig. 4, port controller module 604 may include a port controller/processor module 606 in communication with an out-of-band channel connectivity module 608 and a data storage module 612. Port controller/processor module 606 may further communicate either directly or via out-of-band channel connectivity module 608 with an out-of-band channel physical interface 610 and may communicate with an optional port configuration device interface 618 (indicated in Fig. 4 with dashed lines). As shown in Fig. 4, port controller/processor module 606 does not necessarily monitor, or affect in any way, data passing through the port controller module 604 via patch panel front-face port physical interface 614 and patch panel back-face port physical interface 616. However, in other embodiments (e.g., embodiments in which port controller module 604 is configured as a repeater), a data signal passing through port controller module 604 may be processed in some manner (e.g., amplified) as the signal passes through port controller module 604.

As described above with respect to Fig. 3, port controller/processor module 606 may communicate with the I-Panel panel controller module to send port update messages to the panel controller module and to receive configuration/control parameter updates from the panel controller module. Upon receipt of an update message from the panel controller module, port controller/processor module 606 may update status information stored within data storage module 612. Port controller/processor module 606 may use parameters received from the I-Panel panel controller module and stored in data storage module 612 to control operation of port controller module 604 with respect to actions performed by the port controller module to control events monitored by port controller module 604 and to control events reported via update messages to the panel controller module.

In one exemplary port controller module, port controller/processor module 606 may retrieve a local patch panel identifier, a local port identifier, a local port connection status and stored physical network topology information associated with the current, or local, port controller module (e.g., I-Panel/port information related to the current, or local, I-Panel port) from data storage module 612. Port controller/processor module 606 may provide the retrieved information to out-of-band channel connectivity module 608. Out-of-band channel connectivity module 608 may then generate an outbound port message that includes the retrieved local patch panel identifier, local port identifier, and physical network topology information, as described above with respect to Fig. 1A. Out-of-band channel connectivity module 608 may proceed to transmit the outbound port message on the out-of-band channel via a transmitter operated by out-of-band channel physical interface 610. Further, out-of-band channel connectivity module 608 may receive an inbound message from a remote port that includes a remote patch panel identifier, a remote port identifier information, and physical network topology information, as described above with respect to Fig. 1A, via a receiver operated by out-of-band channel physical interface 610.

In an exemplary configuration in which out-of-band channel physical interface 610 supports a single out-of-band conductor, out-of-band channel connectivity module 608 may repeatedly alternate between transmitting an outbound port message and determining if an outbound message from a remote port has been received. In another exemplary configuration in which out-of-band channel physical interface 610 supports two separate out-of-band conductors, out-of-band channel connectivity module 608 may simultaneously transmit an out-of-band outbound port message and determine if an out-of-band message from a remote port has been received.

The terms "remote port" and "local port" are relative terms. For example, from the perspective of an I-Panel port controller, the term "remote port" may be used to refer to any port other than the "local port" supported by that I-Panel port controller. Given that an I-Panel may support multiple ports, a "remote port" may be a port on the same, or local, I-Panel as a "local port" or the "remote port" may be a port on another, or remote, I-Panel. A remote port and a local port behave, and are, exactly the same except that each has a relative position with respect to the other. For example, each port, based upon the perspective of that port, transmits an out-of-bound outbound port message that includes a local patch panel identifier and a local port identifier. Further each port, based upon the perspective of that port, receives a remote patch panel identifier and a remote port identifier within a received message.

In the above representative example, the local I-Panel is an example of a "local device" and the remote I-Panel is an example of a "remote device." However, such local devices and remote devices may be any network connected piece of equipment that supports network cable connection monitoring and/or physical network topology monitoring. For example, a local device with a local port may be a patch panel, a switch, a router, a hub, an end-user device, a printer, or any other network-connected device capable of supporting network cable connection monitoring and/or physical network topology monitoring. Further, a remote device with a remote port may be a patch panel, a switch, a router, a hub, an end-user device, a printer, or any other network-connected device capable of supporting network cable connection monitoring and/or physical network topology monitoring. In addition, any combination of local devices and remote devices may communicate to support the network cable connection monitoring process and/or the physical network topology monitoring process described above.

Referring again to Fig. 3, the port controller module may be configured to include, within I-Panel port identifier information, the physical equipment (e.g., switch/port) and/or physical location (office/wall jack) information associated with each patch panel cable terminated at port controller module 604 via patch panel back-face physical interface 616. As described above, such I-Panel/port identifier information and physical network topology information may be exchanged between I-Panel port controller module 604 over a patch cord out-of-band channel upon establishment of a new patch cord connection. For example, physical network topology information may be included with I-Panel/port identifier information in an initial broadcast message and/or exchanged between ports after the ports have detected one another. Further, as described above, the connection information may be passed by each respective port controller module to its respective panel controller module and may be passed from the panel controller module over a network connection to the NMS. In this manner, the I-Panel many provide the NMS with physical network topology information, or network path information, associated with the respective patch cord connections, in real-time, as patch panel connections are formed. Further, by dynamically monitoring and dynamically reporting changes in patch panel port connectivity, as the changes occur, the NMS is assured access to highly accurate physical network topology information, or network path information, in real-time.

Upon determining, based upon the monitored out-of-band messages, that a change in port level connectivity has occurred, out-of-band channel connectivity module 608 may notify port controller/processor module 606. Port controller/processor module 606 may store the updated status information and newly received physical network topology information in data storage module 612 and send an update message to the panel controller module, as described above with respect to Fig. 3.

In an exemplary port controller module 604 configuration, port controller/processor module 606 may support receipt of port configuration data via a configuration device that connects to port controller module 604 via patch panel front-face port physical interface 614 and/or via optional port configuration device interface 618. For example, a configuration device such as a personal digital assistant (PDA) or laptop computer may connect to port controller module 604 via patch panel front-face physical interface 614 or via optional port configuration device interface 618 to load physical network topology information (e.g., building name, equipment closet identifier, device identifier/physical port identifier, etc.) associated with a physical location and/or equipment supported by a cable connected to port controller module 604 via patch panel back-face physical interface 616.

As described above, different port controller module configurations may include a port controller/processor module with capabilities that range from nominal functions, which do not monitor or control data passing through the 1-Panel port, to highly sophisticated monitoring and control functions. As such, the hardware/software modules required to implement port controller module 604 may range from relatively simple modules with comparatively slight storage and processing capabilities to relatively complex modules with comparatively significant storage and processing capabilities.

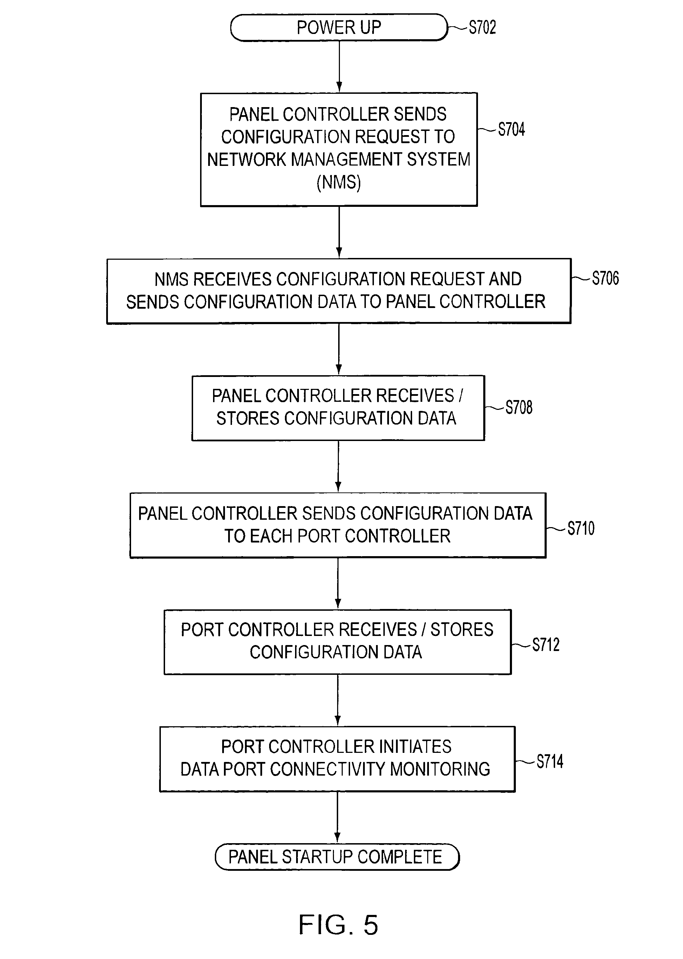

Fig. 5 is a flow chart of an exemplary workflow associated with the startup of an exemplary I-Panel device. As shown in Fig. 5, upon powering up, at step S702, an I-Panel device, the I-Panel panel controller may send, at step S704, a configuration request to a remote NMS. Upon receipt, at step S706, by the NMS of the configuration request, the NMS may retrieve, from a storage repository, port level physical network topology information in addition to other configuration information for the I-Panel device from which the configuration request was received and send the retrieved information to the I-Panel panel controller. The port level physical network topology retrieved by the NMS may be manually entered at a NMS workstation and stored in an NMS storage repository as part of the I-Panel installation process. Alternatively, the NMS storage repository may include port level physical network topology information first stored in individual patch panels using a port level programming device and collected at the NMS as part of the patch panel monitoring process.

Upon receipt, at step S708, of the requested configuration parameters, the I-Panel panel controller may store the received parameters. At step S710, the I-Panel panel controller may send all or a portion of the received configuration parameters to each of the respective I-Panel port controllers associated with each of the respective I-Panel ports to which the sent configuration parameters apply. Upon receipt, at step S712, of configuration data from the panel controller, each port controller may store the configuration parameters. Each port controller may then initiate, at step 714, port connectivity monitoring and/or data traffic monitoring in accordance with the received control parameters, as described above.

In exemplary embodiments, the I-panel panel controller and/or port controller may compare the received control parameters and physical network topology information with locally stored control parameters and locally stored physical network topology information. The I-panel panel controller and/or port controller may generate an alarm if the information received from the NMS conflicts with locally stored information. Such alarms may be transmitted to the NMS for review by an operator and may request that the operator authorize an overwrite of the locally stored information. The I-panel panel controller alarms, port controller alarms, and/or NMS alarms may be, for example, audible, visual (using one or more displays and/or LEDs), and/or tactile (e.g. being applied to an I/O device such as a joystick, mouse, or trackball). The alarms may be specialized dependent on the particular physical location, logical location, and/or type of conflict detected. Upon receipt of an instruction to over-write, the panel controller and/or port controller may over-write stored conflicting information with the new information received from the NMS and proceed with operations based upon the newly stored control and physical network topology information, as described above.

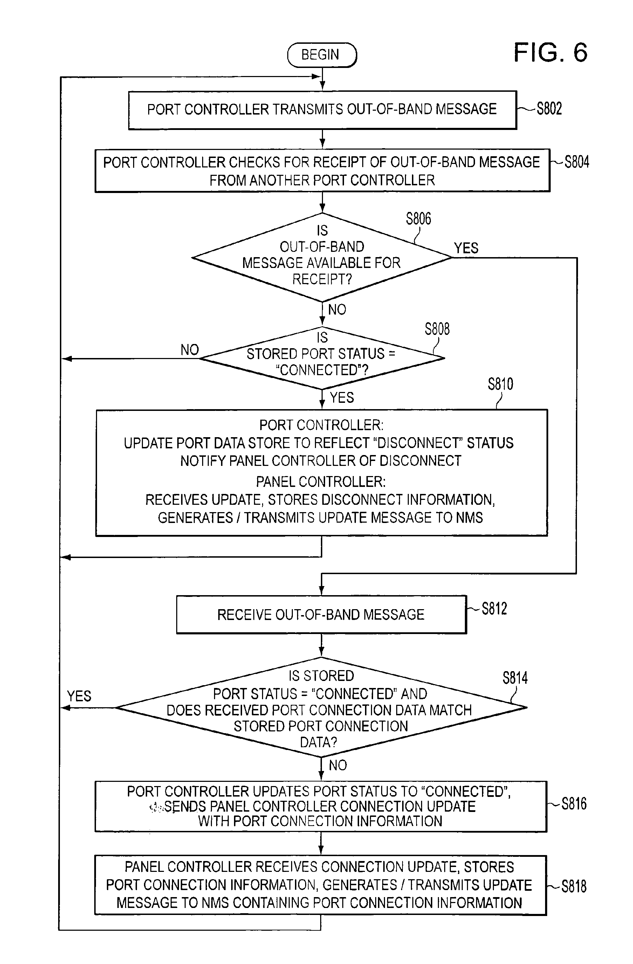

Fig. 6 is a flow chart of an exemplary workflow associated with monitoring I-Panel port level connectivity based on the monitoring of communication on an out-of-band communication channel, as described above. As shown in Fig. 6, upon initiation of patch cord connectivity monitoring, an I-Panel port controller may transmit, at step S802, an outbound message on the out-of-band channel associated with the monitored port. Such an outbound message may contain I-Panel/port information and physical network topology information associated with the monitored I-Panel port.

Next, the port controller may determine, at step S804, whether an out-of-band message from another I-Panel port controller is available for receipt. If the port controller determines, at step S806, that an out-of-band message is not available for receipt, the port controller checks, at step S808, the currently stored port status (also called the connection status). If the port controller determines that the stored connection status indicates that the port is not connected, the process flow returns to S802 to again transmit an out-of-band channel outbound message containing I-Panel/port information associated with the monitored I-Panel port. If the port controller determines, at step S808, that the stored connection status indicates that the port status is "connected," the port controller may update, at step S810, a port-level data store to reflect the new port status as "disconnected" and may generate and send to the I-Panel panel controller a message notifying the panel controller of the disconnect. Upon receipt of the message from the port controller containing a new port status, the panel controller may store the port status information in a panel level information store and transmit a status update to the NMS via the network. The process flow may then proceed to step S802.

If the port controller determines, at step S806, that an out-of-band message is available for receipt, the port controller receives, at step S812, the out-of-band message. Then, the port controller determines, at step S814, whether the port status is "connected" and whether the received I-Panel/port information matches previously stored I-Panel/port information. If the port status is "connected" and the received I-Panel/port information matches previously stored I-Panel/port information, no update to the panel controller is generated and processing returns to step S802.

However, if the port controller determines, at step S814, that the stored port status is "disconnected" and/or that the received I-Panel/port information does not match previously stored I-Panel/port information, the port controller may conclude that a change in port connectivity status has occurred. Therefore, at step S816, the port controller may update the port-level data store to reflect a port status of "connected," and the newly received remote physical network topology information. The port controller may then send a message to the panel controller containing the new port status, the newly received I-Panel/port connection information, and the newly received remote physical network topology information. The panel controller receives, at step S818, the update message and in response may update the panel-level information store to reflect the received connection status, port connectivity information, and newly received remote physical network topology information. The panel controller then may transmit an update message via the network to the NMS. The process flow may then return to step S802.

As described above, the port controller module may be configured to include, within I-Panel port identifier information, the physical equipment (e.g., switch and/or port) and/or physical location (office and/or wall jack) information associated with each patch panel cable terminated at the port controller module via the patch panel back-face physical interface. Such I-Panel port identification and physical network topology information may be exchanged between I-Panel port controller module 604 over a patch cord out-of-band channel upon establishment of a new patch cord connection. Further, as described above, the connection information may be passed, at step S816, by each respective port controller module to its respective panel controller module and may be passed, at step S818, from the panel controller module over a network connection to the NMS. In this manner, the I-Panel may provide the NMS with physical network topology information, or network path information, associated with the respective patch cord connections, in real-time, as patch panel connections are formed. Further, by dynamically monitoring and dynamically reporting changes in patch panel port connectivity, as the changes occur, the NMS is assured access to highly accurate physical network topology information, or network path information, in real-time.

It will be appreciated that the exemplary embodiments described above and illustrated in the drawings represent only a few of the many ways of implementing a physical network topology information monitoring system. The present invention is not limited to use within a patch panel system or any specific network cable infrastructure configuration disclosed herein, but may be applied to any network connected device deployed within any network cable infrastructure configuration.

The disclosed physical network topology monitoring capability may be included within any network connected device. For example, physical network topology information may be exchanged between a patch panel and another device configured to support the physical network topology monitoring process and/or between any two network connected devices configured to support the physical network topology monitoring process. Such devices are not limited to the exemplary patch panel embodiments described above. For example, such devices may include, but are not limited to: a wall jack, a printer, an end-user workstation, a router, a switch, a patch panel, any end-user device, or any other network-connected device.

A device configured to support the physical network topology monitoring process may be implemented in any number of hardware and software modules and is not limited to any specific hardware/software module architecture. The device may be implemented in any number of ways and is not limited in implementation to execute process flows precisely as described above. The network cable connection monitoring process and physical network topology monitoring process described above and illustrated in the flow charts and diagrams may be modified in any manner that accomplishes at least the functions described herein.

It is to be understood that various functions of the network cable connection monitoring and physical network topology monitoring processes may be distributed in any manner among any quantity (e.g., one or more) of hardware and/or software modules, computer or processing systems, or circuitry.

A patch panel or other device configured to support the network cable connection monitoring process and physical network topology monitoring process may support any type of network cabling, including but not limited to copper and/or optical fiber cabling. For example, port connections on the face plate of an I-Panel and/or an I-Panel network connection to other devices configured to support the network cable connection monitoring and physical network topology monitoring processes may support any type of cable and cable connector, including but not limited to RJ-45 based connectors and optical fiber connectors. Port connections on the rear plate of an I-Panel may support any type of cable and cable connector, including but not limited to punch-down ports, RJ-45 ports, optical fiber connections, etc.

Network Management System processes associated with the I-Panel or other devices configured to support the network cable connection monitoring and physical network topology monitoring processes may be integrated within a stand-alone system or may execute separately and be coupled to any number of devices, workstation computers, server computers, or data storage devices via any communication medium (e.g., network, modem, direct connection, etc.). The Network Management System processes associated with the network cable connection monitoring and physical network topology monitoring processes may be implemented by any quantity of electronic devices. For example, these Network Management System processes may be implemented by personal or other type of computers or processing systems (e.g., IBM-compatible, Apple-compatible, laptop, tablet, palm, smartphone, etc.). The computer system may include any commercially available operating system (e.g., Windows, OS/2, Unix, Linux, DOS, etc.), any commercially available and/or custom software (e.g., communication software, traffic analysis software, etc.) and any types of input/output devices (e.g., keyboard, mouse, probes, I/O port, etc.).

Network Management System software or other device software (e.g., I-Panel software) associated with the network cable connection monitoring and physical network topology monitoring processes may be implemented in any desired computer language, and can be developed by one of ordinary skill in the computer and/or programming arts based on the functional description contained herein and the flow charts illustrated in the drawings. For example, in one exemplary embodiment software supporting the network cable connection monitoring and physical network topology monitoring processes may be written using the C++ programming language. Embodiments of the present invention are, however, not limited to being implemented in any specific programming language. The various modules and data sets may be stored in any quantity or types of file, data, or database structures. Moreover, the software associated with the network cable connection monitoring and physical network topology monitoring processes may be distributed via any suitable medium. For example, the software may be stored on devices such as CD-ROM or diskette, downloaded from the Internet or other network (e.g., via packets and/or carrier signals), downloaded from a bulletin board (e.g., via carrier signals), or distributed by other conventional distribution mechanisms.

The format and structure of internal structures used to hold intermediate information in support of the network cable connection monitoring and physical network topology monitoring processes may include any and all structures and fields. The internal structures are not limited to files, arrays, matrices, or control booleans/variables.

The Network Management System used to support the network cable connection monitoring and physical network topology monitoring processes may be installed and executed on a computer system in any conventional or other manner (e.g., an install program, copying files, entering an execute command, etc.). The functions associated with the Network Management System may be performed on any quantity of computers or other processing systems. Further, the specific functions may be assigned to one or more of the computer systems in any desired fashion.

The network cable connection monitoring and physical network topology monitoring processes may accommodate any quantity and any type of data set files and/or databases or other structures containing stored data sets, measured data sets and/or residual data sets in any desired format (e.g., ASCII, plain text, any word processor or other application format, etc.).

The network cable connection monitoring process and physical network topology monitoring process output may be presented to the user (e.g., via the Network Management System) in any manner using alphanumeric and/or visual presentation formats. Connection data may be presented in either alphanumeric or visual form and can be processed by the NMS in any manner and/or using any number of threshold values and/or rule sets.

Further, any references herein of software performing various functions generally refer to computer systems or processors performing those functions under software control. The computer system may alternatively be implemented by hardware or other processing circuitry. The various functions of the network cable connection monitoring and physical network topology monitoring processes may be distributed in any manner among any quantity (e.g., one or more) of hardware and/or software modules, computer or processing systems or circuitry, where the computer or processing systems may be disposed locally or remotely of each other and communicate via any suitable communication medium (e.g., LAN, WAN, Intranet, Internet, hardwire, modem connection, wireless, etc.). The software and/or processes described above and illustrated in the flow charts and diagrams may be modified in any manner that accomplishes the functions described herein.

The physical network topology information reporting apparatus and method, described above, may be implemented within a modular I-Panel patch panel architecture, as described above, and/or may be implemented within any network connected device that is capable of storing physical network topology information and that is capable of reporting the stored physical network topology information in response to a query and/or is capable of reporting the stored physical network topology information in association with a report generated in response to a change in network cable connectivity.

From the foregoing description it will be appreciated that an apparatus and method for managing network cable connection and physical network topology information are disclosed that are capable of accurately assessing, and reporting in real-time, deployed physical network topology information.

While specific embodiments of an apparatus and method of managing network cable connections and physical network topology information are disclosed, these embodiments should be viewed as illustrative, not limiting. Various modification, improvements and substitutes are possible within the scope of the present invention. Although specific terms are employed herein, they are used in their ordinary and accustomed manner only, unless expressly defined differently herein, and not for purposes of limitation.

## Claims

1. A method for monitoring a physical topology of a network containing a local device having a local port and a remote device having a remote port connectable to the local device through a data channel and an out-of-band channel, the method comprising:
(a) storing physical topology information that describes at least one of a physical location, a device identifier, or a port identifier in the local device and the remote device;
(b) transmitting, from the local device on the out-of-band channel, a local device identifier and a local port identifier associated with the local device and the physical topology information stored by the local device;
(c) receiving, at the local device on the out-of-band channel, a remote device identifier associated with the remote device, a remote port identifier associated with the remote device, and the physical topology information stored by the remote device if the remote device and the remote device are connected through the out-of-band channel;
(d) determining a status of a network cable connection between the local device and the remote device based upon the remote device identifier and the remote port identifier received by the local device; and
(e) transmitting a status update message to a network management system, the status update message including the local device identifier, the local port identifier, the transmitted physical topology information, the received remote device identifier, the received remote port identifier, the received physical topology information, and the status of the network cable connection.

2. The method of claim 1, further comprising setting the status of the network cable connection to "disconnected" if the remote device identifier and the remote port identifier are not received by the local device, and setting the status of the network cable connection to "connected" if the remote device identifier and the remote port identifier are received by the local device.

3. The method of claim 1, wherein (d) further comprises:
(d.1) comparing the received remote device identifier and the received remote port identifier with a stored previously received remote device identifier and a stored previously received remote port identifier.

4. The method of claim 3, wherein (d.1) is performed independently by each port in the local device and wherein (d.1) further comprises:
(d.1.1) notifying a device controller upon determining that a change in the status of the cable connection has occurred; and
where (e) is performed by the device controller in response to the notification and preferably wherein (d.1.1) further comprises determining that the change in the status of the cable connection has occurred if at least one of:
the status of the network cable connection is different from a stored status of the network cable connection; or
the received remote device identifier and the received remote port identifier do not match the stored previously received remote device identifier and the stored previously received remote port identifier.

5. The method of claim 1, wherein (e) further comprises:
(e.1) the local device communicating with the network management system via an indirect physical connection and preferably wherein in (e.1) the indirect physical connection comprises a daisy-chain network connection connecting a plurality of devices.

6. The method of claim 1, wherein (e) further comprises:
(e.1) communicating with the network management system via an SNMP message or further comprising:
(h) storing a plurality of managed data items within a data store within the device in accordance with a defined SNMP management information base.

7. The method of claim 1, further comprising transmitting the physical network topology information in an initial broadcast message regardless of whether a connection between the local port and the remote port has been detected or further comprising exchanging the physical network topology information between the local port and the remote port only after the local port and the remote port have detected one another.

8. A local device for monitoring a physical topology of a network comprising the local device and a remote device connectable to the local device through a data channel and an out-of-band channel of a network cable connection, the local device comprising:
the port having a local port identifier associated therewith;
a storage device adapted to store physical topology information that describes at least one of a physical location of the local device, a local device identifier, or the local port identifier;
a transmitter adapted to transmit, on the out-of-band channel, the local device identifier, the local port identifier, and the stored physical topology information;
a receiver adapted to receive, on the out-of-band channel, a remote device identifier associated with the remote device, a remote port identifier associated with the remote device, and physical topology information stored by the remote device if the remote device and the remote device are connected through the out-of-band channel;
a port controller adapted to couple the storage device to the transmitter and to the receiver, to determine a status of the network cable connection based upon the received remote device identifier and the received remote port identifier, and to generate a port status update upon determining that a change in the status of the network cable connection has occurred; and
a device controller adapted to receive the port status update and to transmit a status update message to a network management system, the status update message including the local device identifier, the local port identifier, the transmitted physical topology information, the remote device identifier, the remote port identifier, the received physical topology information, and the status of the network cable connection.

9. The local device of claim 8, wherein the status of the network cable connection is "disconnected" if the remote device identifier and the remote port identifier are not received by the local device, and is "connected" if the remote device identifier and the remote port identifier are received by the local device.

10. The method of claim 1 or local device of claim 8, wherein the local device and the remote device are the same device and the local port and the remote port are different ports or wherein the local device and the remote device are directly connected using the network cable connection.

11. The local device of claim 8, further comprising at least one of:
a network module adapted to support communication with the network management system; or
an SNMP module adapted to support communication with the network management system via a SNMP message or wherein the storage device is adapted to store a plurality of managed data items within a data store within the local device in accordance with a defined SNMP management information base.

12. A program product apparatus having a computer readable medium with computer program logic recorded thereon for monitoring a physical topology of a network comprising the local device and a remote device connectable to the local device through a data channel and an out-of-band channel of a network cable connection, the program product apparatus of the local device comprising:
a storage device module adapted to store physical topology information that describes at least one of a physical location of the local device, a local device identifier, or a local port identifier of a local port of the local device;
a transmitter module adapted to transmit, on the out-of-band channel, the local device identifier and the local port identifier and the stored physical topology information;
a receiver module adapted to receive, on the out-of-band channel, a remote device identifier and a remote port identifier associated with the remote device and physical topology information stored by the remote device;
a port controller module adapted to couple the storage device to the transmitter and to the receiver, to determine a status of the network cable connection based upon the received remote device identifier and the received remote port identifier, and to generate a port status update upon determining that a change in the status of the cable connection has occurred; and
a device controller module adapted to receive the port status update and to transmit a status update message to a network management system that includes the local device identifier, the local port identifier, the transmitted physical topology information, the received remote device identifier, the received remote port identifier, the received physical topology information, and the status of the network cable connection.

13. The local device of claim 8 or program product apparatus of claim 12, where the port controller module comprises:
a comparison module adapted to compare the received remote device identifier and the received remote port identifier with a previously stored received remote device identifier and a previously stored received remote port identifier and preferably wherein the change in the status of the cable connection is determined to have occurred if at least one of:
the status of the network cable connection is different from a stored status of the network cable connection; or
the received remote device identifier and the received remote port identifier do not match the stored previously received remote device identifier and the stored previously received remote port identifier.

14. The program product apparatus of claim 12, further comprising:
a network module adapted to support communication with the network management system via a daisy-chain network connection or further comprising:
an SNMP module adapted to support communication with the network management system via a SNMP message.

15. The local device of claim 8 or program product apparatus of claim 12, wherein the transmitter is adapted to transmit the physical network topology information in an initial broadcast message regardless of whether a connection between the local port and the remote port has been detected or wherein the transmitter is adapted to transmit the physical network topology information between the local port and the remote port only after the local port and the remote port have detected one another.

16. An apparatus for monitoring a physical topology of a network comprising the local device and a remote device connectable to the local device through a data channel and an out-of-band channel of a network cable connection, the apparatus comprising:
means for storing physical topology information that describes at least one of a physical location of the local device, a local device identifier, or a local port identifier of a local port of the local device;
means for transmitting, on the out-of-band channel, the local device identifier, the local port identifier, and the stored physical topology information;
means for receiving, on the out-of-band channel, a remote device identifier and a remote port identifier associated with the remote device and physical topology information stored by the remote device;
means for determining a status of the network cable connection based upon the received remote device identifier and the received remote port identifier; and
means for transmitting a status update message to a network management system that includes the local device identifier, the local port identifier, the transmitted physical topology information, the received remote device identifier, the received remote port identifier, the received physical topology information, and the status of the network cable connection.
